# EUROPEAN PATENT APPLICATION

(11) **EP 1 702 883 A1**
(43) Date of publication of application: **20.09.2006**
(21) Application number: 04808118.6
(22) Date of filing: 24.12.2004
(51) Int. Cl.: B68G 7/06, A47C 27/14

(54) **EXPANSION-MOLDED ARTICLE FORMED INTEGRALLY WITH SURFACE SKIN FOR USE IN VEHICLE SEAT**

(30) Priority: 26.12.2003 JP 2003435571
(71) Applicant: TS Tech Co., Ltd, Asaka-shi, Saitama 351-0012 (JP)
(72) Inventor: YABE, Takahito c/o TS Tech Co., Ltd., Shioya-gun, Tochigi 329-1217 (JP); FUKUDA, Takako c/o TS Tech Co., Ltd., Shioya-gun, Tochigi 329-1217 (JP)
(74) Representative: Crippa, Paolo Ernesto
(86) International application number: PCT/JP2004/019768
(87) International publication number: WO 2005/063611

(57) **Abstract**

A skin integrated foamed product for a vehicle seat, includes a skin 1 and a layer 2 of a first foamed resin material integrated with the skin 1, the skin 1 having a double layer structure which is formed of a sheet of covering material 1a having an air-permeability and a foamed slab 1b made of a second foamed rein material including a polyester system and laminated on a back of the covering sheet 1a as a layer of wadding material, and the foamed slab 1b having a fine cell structure, the number of whose cells is 80-90/25mm, wherein a portion of the first foamed resin material is impregnated into the foamed slab 1b and forms an impregnated layer 3 within the foamed slab 1b, so that the skin 1 and the layer of the first foamed resin material 2 are integrated with each other.

## Description

### TECHNICAL FIELD

The present invention relates to a skin integrated foamed product which is a cushion body for a vehicle seat.

### BACKGROUND OF THE INVENTION

Hitherto, there is known a cushion body of a vehicle seat which comprises a skin and a pad integrated with the skin. The skin comprises a sheet of covering material and a layer of wadding material which has an air-permeability lower than that of other parts and is laminated on the back of the covering sheet. Formation of the cushion body is carried out by causing a foaming resin material for formation of the pad to be foamed and integrated with the skin so as to come into contact with the wadding layer of the skin, to thereby form the pad which is integrated with the skin. In the cushion body which is produced in this way, impregnation of the foamed resin material into the wadding material is prevented from progressing by the low air-permeable wadding material. Therefore, the cushion body provides a soft or tender sitting feeling to the user (Japanese Utility Model Application Publication No. Hei. 3-35200).

However, in the cushion body, if the air-permeability of the wadding material is less than 5cc/cm2/sec, the air-permeability of the entire cushion body is lowered and the cushion body is easy to become considerably stuffy when the user sits on the seat. Also, in a case where the air-permeability of the wadding material exceeds 40cc/cm2/sec, the impregnation of the foamed resin material into the wadding material is progressed, whereby the foamed resin material is excessively impregnated into the wadding material, so that a surface of the cushion body feels firm to the touch. For these reasons, there is proposed a seat cushion in which wadding material having an air-permeability of 5-40cc/cm2/sec is employed (Japanese Utility Model Application Publication No. Hei. 5-3305).

The inventors of the present invention zealously investigated such a skin integrated foamed product with a view to providing a skin integrated foamed product for a vehicle seat in which even if impregnation of an foamed resin material into wadding material is progressed to a certain degree, a surface of the skin integrated foamed product feels soft or tender to the tough, and which can provide a good sitting feeling to the user and can be positively prevented from becoming considerably stuffy.

As a result, the inventors have found that by using a foamed slab with a specified number of cells as the layer of wadding material for the skin integrated foamed product, it is possible to provide a skin integrated foamed product for a vehicle seat in which a surface of the skin integrated foamed product feels soft or tender to the tough, and which can provide a good sitting feeling to the user and can be positively prevented from becoming considerably stuffy.

### SUMMARY OF THE INVENTION

It is therefore an object of the present invention to provide a skin integrated foamed product for a vehicle seat in which a surface of the skin integrated foamed product feels soft or tender to the tough, and which can provide a good sitting feeling to the user and can be positively prevented from becoming stuffy.

In accordance with the present invention, there is provided a skin integrated foamed product for a vehicle seat. The skin integrated foamed product comprises a skin and a layer of first foamed resin material integrated with the skin, the skin having a double layer structure which is formed of a sheet of covering material having an air-permeability, such as fabric, and a foamed slab made of second foamed rein material including a polyester system and laminated on the back of the covering sheet as a layer of wadding material, the foamed slab having a fine cell structure, the number of whose cells is 80-90/25mm. In the skin integrated foamed product, a portion of the first foamed resin material is impregnated into the foamed slab and forms an impregnated layer within the foamed slab, so that the skin and the layer of the first foamed resin material are integrated with each other.

A general foamed slab is made of foamed resin material having a cell structure, the number of whose cell is 40-50/25mm. In the skin integrated foamed product for the vehicle seat according to the present invention, the foamed slab which is made of the first foamed rein material including a polyester system and has the fine cell structure, the number of whose cell is 80-90/25mm is laminated on the back of the covering sheet, thus suppressing the impregnation of the first foamed resin material into the foamed slab. Therefore, the skin integrated foamed product according to the present invention feels soft or tender to the touch, provides a good sitting feeling to the user, and is prevented from becoming considerably stuffy even if the user sits on a seat including the skin integrated foamed product according to the present invention, for a long time. Moreover, in the skin integrated foamed product for the vehicle seat according to the present invention, the portion of the first foamed resin material is impregnated into the foamed slab, thus improving the integration of the skin and the layer of the first foamed resin material. Thus, according to the present invention, the skin integrated foamed product which is suitable for the vehicle seat can be obtained.

### BRIEF DESCRIPTION OF THE DRAWINGS

Fig. 1 is a schematic sectional view of a skin of a skin integrated foamed product according to the present invention;

Fig. 2 is a schematic sectional view of the skin integrated foamed product with the skin of Fig. 1; and

Fig. 3 is a graph illustrating changes in stuffiness which occur in the skin integrated foamed product according to the present invention and a conventional skin integrated foamed product, with the passage of time.

### BEST MODE FOR CARRYING OUT THE INVENTION

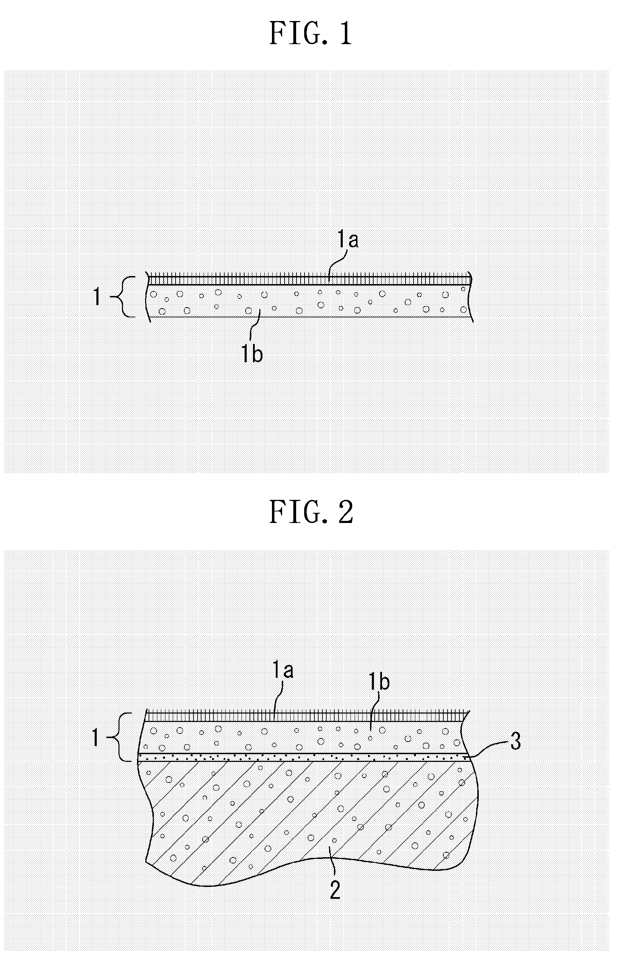

Referring now to Fig. 1, there is illustrated a structure of a skin 1 for a skin integrated foamed product according to an embodiment of the present invention. The skin 1 has a laminated structure which is formed of a sheet of covering material 1a and a layer of wadding material 1b which is laminated on the back of the covering sheet 1a.

In the illustrated example, as the covering material, there is employed an air-permeable material such as fabric, synthetic leather having ventilating holes or the like. As the layer of wadding material 1b (hereinafter referred to as "foamed slab"), there is employed a foamed slab which is made of a foamed rein material including a polyester system and has a fine cell structure, the number of whose cells is 80-90/25mm. The number of the cells of the foamed slab can be probed by microscopically examining the number of cells at a straight area of 25mm within the cell structure.

As discussed above, the skin 1 has the laminated structure which is formed of the covering material sheet 1a and the wadding layer 1b, so that the skin 1 has a double layer structure. As the foamed slab 1b, there is preferably employed a foamed slab which has an air-permeability ranging from 10cc/cm2/sec to 15cc/cm2/sec.

When manufacturing of the skin integrated foamed product, for example, a cushion body for a vehicle seat is to be carried out using the skin 1 constructed as discussed above, the skin 1 is set in a cavity of a forming mold in such a manner that the covering sheet 1a faces a forming surface of the cavity. In this condition, a foaming resin material for formation of a pad, such as a foaming urethane resin is supplied into the cavity of the forming mold, caused to foam, and solidified. Thus, the skin integrated foamed product is produced, in which the pad formed of the foamed resin material is integrated with the foamed slab 1b of the skin 1. At the time of forming the skin integrated foamed product, air may be applied, via an air blower, to the skin 1 set in the cavity of the forming mold, to thereby cause the skin 1 to be positively drawn onto the forming surface of the cavity and cause the skin 1 to be tightly contacted with the forming surface of the cavity. As the foaming resin material, there is preferably employ a foaming resin material which tends to be cured at a high speed of about 2 minutes depending upon an amount of a catalyst to be added, when the foaming resin material in quantity to allow the packing rate of the foamed resin material to become about 125-130% of a free foaming density is supplied into the forming mold.

Referring now to Fig. 2, there is illustrated the skin integrated foamed product which is made in the above-mentioned manner and in which the pad 2 formed of the foamed resin material is integrated with the skin 1 and a portion of the foamed resin material is impregnated in the foamed slab 1b, whereby a foamed resin-impregnated layer 3 is formed within the foamed slab 1b. Moreover, the rate of the foamed resin-impregnation into the foamed slab 1b is controlled in such a manner that a thickness of the foamed resin-impregnated resin layer 3 is restricted to about 20-30% of the thickness of the foamed slab 1b. Concretely, the foamed resin-impregnated layer 3 has a thickness of about 0.6-1.2mm with respect to the foamed slab 1b which has the fine cell structure with the cell number of 80-90/25mm and a thickness of about 3-4mm.

In the skin integrated foamed product, the foamed resin-impregnated layer 3 is thin with respect to the thickness of the foamed slab 1b, so that when the user sits on the seat which includes the skin integrated foamed product as the cushion body of the seat, the cushion body does not impart a stiff feeling and a bottoming feeling to the user. Also, the cushion body feels soft to the touch and provides a good sitting feeling to the user due to the presence of the foamed slab 1b. In addition, since the foamed slab 1b is air-permeable, even if the user sits on the seat for a long time, the seat body can be prevented from becoming considerably stuffy. Moreover, due to the presence of the foamed resin-impregnated layer 3, integration of the entire layers can be improved.

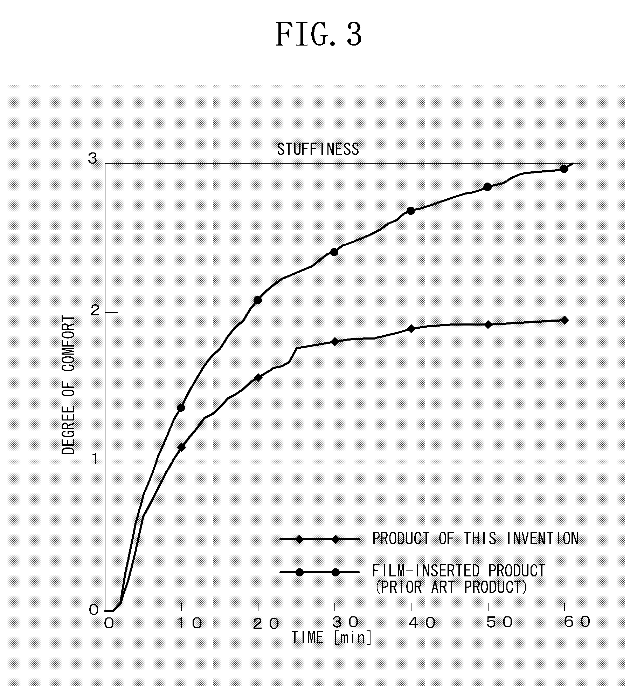

The cushion body of the vehicle seat according to the present invention and the cushion body of the conventional vehicle seat were made in order to compare the cushion body of the present invention with the conventional cushion body. The cushion body of the present invention includes a foamed slab having a fine cell structure which has an air-permeability of 10cc/cm2/sec. The conventional cushion body includes the laminated structure which is formed of the sheet of covering material and the layer of wadding material having a low air-permeability. In terms of the degree of stuffiness caused by the users sitting on the seats and the degree of comfort, the comparison between the cushion bodies was made. The degree of stuffiness in the cushion bodies was judged by causing a sensing portion of a temperature sensor and a sensing portion of a humidity sensor to be stuck into the cushion body of the present invention on which the user had sat and the prior art cushion body on which the user had sat, and then measuring the temperature and humidity of the cushion bodies. The degree of comfort can be judged by the degree of the stuffiness. The measuring results are shown in Fig. 3 in which the stuffiness of the cushion body of the present invention which changes with the passage of time is indicated by black square-shaped symbols and the stuffiness of the conventional cushion body which changes with the passage of time is indicated by black round-shaped symbols. It can be seen from Fig. 3 that the conventional cushion body becomes remarkably stuffy with the passage of time, whereas the stuffiness of the cushion body according to the present invention can be suppressed even if the user sits on the seat for a long time. Thus, it can be seen that the cushion body according to the present invention can provide good comfort to the user.

The terms and expressions which have been employed are used as terms of description and not of limitation, and there is no intention in the use of such terms and expressions of excluding any equivalents of the features shown and described, or portions thereof, but it is recognized that various modifications are possible within the scope of the invention claimed.

## Claims

1. A skin integrated foamed product for a vehicle seat, comprising a skin and a layer of a first foamed resin material integrated with said skin;
said skin having a double layer structure which is formed of a sheet of covering material having an air-permeability, such as fabric, and a foamed slab made of a second foamed rein material including a polyester system and laminated on a back of said covering sheet as a layer of wadding material; and
said foamed slab having a fine cell structure, the number of whose cells is 80-90/25mm;
wherein a portion of said first foamed resin material is impregnated into said foamed slab and form an impregnated layer within said foamed slab, so that said skin and said layer of said first foamed resin material are integrated with each other.
